(19) Europäisches Patentamt / European Patent Office / Office européen des brevets

(11) **EP 2 475 738 B1**

(12) **FASCICULE DE BREVET EUROPEEN**

(45) Date de publication et mention de la délivrance du brevet:
**28.10.2015 Bulletin 2015/44**

(21) Numéro de dépôt: **10807596.1**

(22) Date de dépôt: **18.08.2010**

(51) Int Cl.:
*F25B 9/00* *(2006.01)*      *C09K 5/04* *(2006.01)*

(86) Numéro de dépôt international:
**PCT/FR2010/051729**

(87) Numéro de publication internationale:
**WO 2011/030030 (17.03.2011 Gazette 2011/11)**

(54) **UTILISATION DE COMPOSITIONS TERNAIRES**

VERWENDUNG TERNÄRER ZUSAMMENSETZUNGEN

USE OF TERNARY COMPOSITIONS

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **11.09.2009 FR 0956247**

(43) Date de publication de la demande:
**18.07.2012 Bulletin 2012/29**

(60) Demande divisionnaire:
**15185292.8**

(73) Titulaire: **Arkema France**
**92700 Colombes (FR)**

(72) Inventeur: **RACHED, Wissam**
**F-69630 Chaponost (FR)**

(74) Mandataire: **Dang, Doris**
**ARKEMA FRANCE**
**Département Propriété Industrielle**
**420, rue d'Estienne d'Orves**
**92705 Colombes Cedex (FR)**

(56) Documents cités:
**WO-A1-2010/002023      WO-A2-2010/000993**
**WO-A2-2010/059677      FR-A1- 2 256 381**
**FR-A3- 2 182 956        US-A1- 2006 243 944**
**US-A1- 2008 314 073**

## Description

La présente invention concerne l'utilisation des compositions ternaire renfermant du 2,3,3,3-tetrafluoropropene comme fluides de transfert de chaleur, notamment pour la réfrigération à capacité moyenne par unité de volume balayé par le compresseur.

Les problèmes posés par les substances appauvrissant la couche d'ozone atmosphérique (ODP : ozone depletion potential) ont été traités à Montréal où a été signé le protocole imposant une réduction de la production et de l'utilisation des chlorofluorocarbures (CFC). Ce protocole a fait l'objet d'amendements qui ont imposé l'abandon des CFC et étendu la réglementation à d'autres produits, dont les hydrochlorofluorocarbones (HCFC).

L'industrie de la réfrigération et de la production d'air conditionné a beaucoup investi dans la substitution de ces fluides frigorigènes et c'est ainsi que les hydrofluorocarbures (HFC) ont été commercialisés.

Les (hydro)chlorofluorocarbures utilisés comme agents d'expansion ou solvants ont également été substitués par des HFC.

Dans l'industrie automobile, les systèmes de climatisation des véhicules commercialisés dans de nombreux pays sont passés d'un fluide frigorigène au chlorofluorocarbure (CFC-12) à celui de l'hydrofluorocarbure (1,1,1,2 tetrafluoroéthane : HFC-134a), moins nocif pour la couche d'ozone. Cependant, au regard des objectifs fixés par le protocole de Kyoto, le HFC-134a (GWP = 1300) est considéré comme ayant un pouvoir de réchauffement élevé. La contribution à l'effet de serre d'un fluide est quantifiée par un critère, le GWP (Global Warming Potentials) qui résume le pouvoir de réchauffement en prenant une valeur de référence de 1 pour le dioxyde de carbone.

Le dioxyde de carbone étant non-toxique, ininflammable et ayant un très faible GWP, a été proposé comme fluide frigorigène dans les systèmes de climatisation en remplacement du HFC-134a. Toutefois, l'emploi du dioxyde de carbone présente plusieurs inconvénients, notamment liés à la pression très élevée de sa mise en oeuvre en tant que fluide frigorigène dans les appareils et technologies existants.

Le document WO2004/037913 divulgue l'utilisation des compositions comprenant au moins un fluoroalcène ayant trois ou quatre atomes de carbone, notamment le pentafluoropropène et le tetrafluoropropène, de préférence ayant un GWP au plus de 150, comme fluides de transfert de chaleur.

Le document WO 2005/105947 enseigne l'ajout au tetrafluoropropène, de préférence le 1,3,3,3 tetrafluoropropène, d'un co-agent d'expansion tels que le difluoromethane, le pentafluoroéthane, le tetrafluoroéthane, le difluoroéthane, l'heptafluoropropane, l'hexafluoropropane, le pentafluoropropane, le pentafluorobutane, l'eau et le dioxyde de carbone.

Le document WO 2006/094303 divulgue des compositions binaires du 2,3,3,3 tetrafluoropropène (HFO-1234yf) avec du difluorométhane (HFC-32), et du 2,3,3,3 tetrafluoropropène avec du 1,1,1,2 tetrafluoroéthane (HFC-134a).

Des mélanges quaternaires comprenant du 1,1,1,2,3 pentafluoropropène (HFO-1225ye) en combinaison avec du difluorométhane, du 2,3,3,3 tetrafluoropropène et du HFC-134a ont été divulgués dans ce document. Cependant, le 1,1,1,2,3 pentafluoropropène est toxique.

Des mélanges quaternaires comprenant du 2,3,3,3 tetrafluoropropène en combinaison avec du iodotrifluorométhane ($CF_3I$), du HFC-32 et du HFC-134a ont également été divulgués dans le document WO 2006/094303. Toutefois, le $CF_3I$ possède un ODP non nul et pose des problèmes de stabilité et de corrosion.

Le document US 2006/243944 divulgue les mesures de pression de vapeur d'un mélange binaire HFO-1234yf avec du HFC-32 et celles d'un mélange binaire HFO-1234yf avec du HFC-134A.

Le document FR 2 182 956 décrit un échangeur de chaleur à contre-courant croisé.

Le document FR 2 256 381 décrit un dispositif comprenant un circuit de transfert de chaleur fermé avec comme composant principal un échangeur de chaleur à contre-courant.

Un échangeur de chaleur est un dispositif permettant de transférer de l'énergie thermique d'un fluide vers un autre, sans les mélanger. Le flux thermique traverse la surface d'échange qui sépare les fluides. La plupart du temps on utilise cette méthode pour refroidir ou réchauffer un liquide ou un gaz qu'il est impossible de refroidir ou chauffer directement.

Dans les systèmes à compression, l'échange thermique entre le fluide frigorigène et les sources de chaleur s'effectue par l'intermédiaire des fluides caloporteurs. Ces fluides caloporteurs sont à l'état gazeux (l'air dans l'air conditionné et la réfrigération à détente directe), liquide (l'eau dans les pompes à chaleur domestique, l'eau glycolée) ou diphasique.

Il existe différents modes de transfert :

- les deux fluides sont disposés parallèlement et vont dans le même sens : mode à co-courant (antiméthodique);
- les deux fluides sont disposés parallèlement mais vont dans le sens opposé: mode à contre-courant (méthodique);
- les deux fluides sont positionnés perpendiculairement : mode à courant croisé. Le courant croisé peut être à tendance co-courant ou contre-courant ;
- un des deux fluides fait un demi-tour dans un conduit plus large, que le deuxième fluide traverse. Cette configuration est comparable à un échangeur à co-courant sur la moitié de la longueur, et pour l'autre moitié à un échangeur à contre courant : mode à tête d'épingle.

La demanderesse a maintenant découvert que des compositions ternaires du 2,3,3,3 tetrafluoropropène, du 1,1,1,2-tetrafluoroéthane et du difluorométhane sont particulièrement intéressantes comme fluide de transfert de chaleur dans des systèmes de réfrigération à compression avec des échangeurs opérant en mode contre-courant ou en mode courant croisé à tendance contre-courant.

Ainsi, ces compositions peuvent être utilisées comme fluide de transfert de chaleur dans les pompes à chaleur, éventuellement réversible, dans l'air conditionné, air conditionné industriel (papier, salle des serveurs), dans la climatisation domestique mobile, dans la réfrigération et congélation domestique, dans la réfrigération basse et moyenne température et la réfrigération des véhicules frigorifiques mettant en oeuvre des systèmes à compression avec des échangeurs en mode contre-courant ou en mode courant croisé à tendance contre-courant.

Ainsi, un premier objet de la présente invention concerne l'utilisation des compositions ternaires du 2,3,3,3 tetrafluoropropène, du 1,1,1,2-tetrafluoroéthane et du difluorométhane comme fluide de transfert de chaleur dans les systèmes de réfrigération à compression avec des échangeurs en mode contre-courant ou en mode courant croisé à tendance contre-courant.

De préférence, les compositions contiennent essentiellement de 2 à 80 % en poids du 2,3,3,3 tetrafluoropropène, de 2 à 80 % en poids du HFC-134a et de 2 à 80 % en poids du HFC-32.

Avantageusement, les compositions contiennent essentiellement de 45 à 80 % en poids, de préférence de 65 à 80 % en poids du 2,3,3,3 tetrafluoropropène, de 5 à 25 % en poids, de préférence de 5 à 10 % en poids du HFC-134a et dé 15 à 30 % en poids du HFC-32. Les compositions utilisées comme fluide de transfert de chaleur dans la présente invention ne présentent pas les inconvénients précités et ont à la fois un ODP nul et un GWP inférieur à celui des fluides de transfert de chaleur existants comme le R404A (mélange ternaire du pentafluoroéthane (44 % en poids), trifluoroéthane (52 % en poids) et HFC-134a (4 % en poids)) et R407C (mélange ternaire du HFC-134a (52 % en poids), pentafluoroéthane (25 % en poids) et HFC-32 (23 % en poids)).

En outre, les compositions contenant essentiellement de 5 à 25 % en poids du 2,3,3,3 tetrafluoropropène, de 60 à 80 % en poids du HFC-134a et de 15 à 25 % en poids du HFC-32 ne sont pas inflammables.

Les compositions utilisées comme fluide de transfert de chaleur dans la présente invention ont une température critique supérieure à 90 °C (Température critique du R404A est de 72°C). Ces compositions peuvent être utilisés dans les pompes à chaleur pour fournir de la chaleur à des températures moyennes entre 40 à 65 °C et aussi à des températures plus élevées comprises entre 72°C et 90°C (domaine de température ou le R-404A ne peut pas être utilisé).

Les compositions utilisées comme fluide de transfert de chaleur dans la présente invention ont des masses volumiques à la saturation vapeur inférieures à la masse volumique saturée vapeur du R404A. Les capacités volumétriques données par ces compositions sont équivalentes ou supérieures à la capacité volumétrique du R-404A (entre 90 et 131% en fonction des applications). Grâce à ces propriétés, ces compositions peuvent fonctionner avec des diamètres de canalisations inférieurs et donc moins de perte de charge dans les tuyauteries vapeur, ce qui augmente les performances des installations.

Les compositions utilisées comme agent de transfert de chaleur selon la présente invention peuvent être stabilisées. Le stabilisant représente de préférence au plus 5 % en poids par rapport à la composition ternaire.

Comme stabilisants, on peut citer notamment le nitromethane, l'acide ascorbique, l'acide terephtalique, les azoles tels que le tolutriazole ou le benzotriazole, les composés phénoliques tels que le tocopherol, l'hydroquinone, le t-butyl hydroquinone, le 2,6-di-ter-butyl-4-methylphenol, les epoxydes (alkyl éventuellement fluoré ou perfluoré ou alkenyl ou aromatique) tels que les n-butyl glycidyl ether, hexanediol diglycidyl ether, allyl glycidyl ether, butylphenylglycidyl ether, les phosphites, les phosphates, les phosphonates, les thiols et lactones.

Un deuxième objet de la présente invention concerne un procédé de transfert de chaleur dans lequel on utilise les compositions ternaires du 2,3,3,3 tetrafluoropropène, du 1,1,1,2-tetrafluoroéthane et du difluorométhane, telles que définies ci-dessus, comme fluide frigorigène dans des systèmes à compression utilisant des échangeurs en mode contre-courant ou en mode courant croisé à tendance contre-courant.

Le procédé selon le deuxième objet peut être mis en oeuvre en présence de lubrifiants tels que l'huile minérale, alkylbenzène, le polyalkylène glycol et le polyvinyl éther.

PARTIE EXPERIMENTALE

**Outils de calcul**

L'équation RK-Soave est utilisée pour le calcul des densités, enthalpies, entropies et les données d'équilibre liquide vapeur des mélanges. L'utilisation de cette équation nécessite la connaissance des propriétés des corps purs utilisés dans les mélanges en question et aussi les coefficients d'interaction pour chaque binaire.

Les données nécessaires pour chaque corps pur sont:

Température d'ébullition, Température et pression critique, la courbe de pression en fonction de la température à partir du point d'ébullition jusqu'au point critique, les densités liquide saturée et vapeur saturé en fonction de la température.

*HFC-32, HFC-134a:*

Les données sur ces produits sont publiées dans l'ASHRAE Handbook 2005 chapitre 20, et sont aussi disponibles sous Refrop (Logiciel développé par NIST pour le calcul des propriétés des fluides frigorigènes)

*HFO-1234yf:*

Les données de la courbe température-pression du HFO-1234yf sont mesurées par la méthode statique. La température et pression critique sont mesurées par un calorimètre C80 commercialisé par Setaram. Les densités, à saturation en fonction de la température, sont mesurées par la technologie du densimètre à tube vibrant développer par les laboratoires de l'école des Mines de Paris.

*Coefficient d'interaction des binaires*

L'équation RK-Soave utilise des coefficients d'interaction binaire pour représenter le comportement des produits en mélanges. Les coefficients sont calculés en fonction des données expérimentales d'équilibre liquide vapeur.
La technique utilisée pour les mesures d'équilibre liquide vapeur est la méthode de cellule statique analytique. La cellule d'équilibre comprend un tube saphir et est équipée de deux échantillonneurs ROLSITM électromagnétiques. Elle est immergée dans un bain cryothermostat (HUBER HS40). Une agitation magnétique à entraînement par champ tournant à vitesse variable est utilisée pour accélérer l'atteinte des équilibres. L'analyse des échantillons est effectuée par chromatographie (HP5890 seriesII) en phase gazeuse utilisant un catharomètre (TCD).

HFC-32 / HFO-1234yf, HFC-134a/HFO-1234yf:

Les mesures d'équilibre liquide vapeur sur le binaire HFC-32 / HFO-1234yf sont réalisées pour les isothermes suivantes : -10°C, 30°C et 70°C
Les mesures d'équilibre liquide vapeur sur le binaire HFC-134a / HFO-1234yf sont réalisées pour les isothermes suivantes : 20°C

HFC-32 / HFO-134a:

Les données d'équilibre liquide vapeur pour le binaire HFC-134a / HFC-32 sont disponible sous Refprop. Deux isothermes (-20°C et 20°C) et une isobare (30bar) sont utilisées pour le calcul des coefficients d'interaction pour ce binaire.

**Système à compression**

Considérons un système à compression équipé d'un évaporateur et condenseur à contre-courant, d'un compresseur à vis et d'un détendeur.
Le système fonctionne avec 15°C de surchauffe et 5°C de sous refroidissement. L'écart de température minimum entre le fluide secondaire et le fluide frigorigène est considéré de l'ordre de 5°C.
Le rendement isentropique des compresseurs est fonction du taux de compression. Ce rendement est calculé suivant l'équation suivante:

$$\eta_{isen} = a - b(\tau - c)^2 - \frac{d}{\tau - e} \qquad (1)$$

Pour un compresseur à vis, les constantes a, b, c, d et e de l'équation (1) du rendement isentropique sont calculées suivant les données types publiées dans le Handbook "Handbook of air conditioning and refrigeration, page 11.52".
Le %CAP est le pourcentage du rapport de la capacité volumétrique fournie par chaque produit sur la capacité du R-404A.
Le coefficient de performance (COP) est défini, comme étant la puissance utile fournie par le système sur la puissance apportée ou consommée par le système.

Le coefficient de performance de Lorenz (COPLorenz) est un coefficient de performance de référence. Il est fonction de températures et est utilisé pour comparer les COP des différents fluides.
Le coefficient de performance de Lorenz est défini comme suit:

(Les températures T sont en K)

$$T_{moyenne}^{condenseur} = T_{entrée}^{condenseur} - T_{sortie}^{condenseur} \tag{2}$$

$$T_{moyenne}^{évaporateur} = T_{sortie}^{évaporateur} - T_{entrée}^{évaporateur} \tag{3}$$

Le COP de Lorenz dans le cas de l'air conditionnée et réfrigération:

$$COPlorenz = \frac{T_{moyenne}^{évaporateur}}{T_{moyenne}^{condenseur} - T_{moyenne}^{évaporateur}} \tag{4}$$

Le COP de Lorenz dans le cas de chauffage:

$$COPlorenz = \frac{T_{moyenne}^{condenseur}}{T_{moyenne}^{condenseur} - T_{moyenne}^{évaporateur}} \tag{5}$$

Pour chaque composition, le coefficient de performance du cycle de Lorenz est calculé en fonction des températures correspondantes
Le %COP/COPLorenz est le rapport du COP du système par rapport au COP du cycle de Lorenz correspondant.

Résultats mode chauffage

En mode chauffage, le système à compression fonctionne entre une température d'entrée du fluide frigorigène à l'évaporateur de -5°C et une température d'entrée du fluide frigorigène au condenseur de 50°C. Le système fournit de la chaleur à 45°C.
Les performances des compositions selon l'invention dans les conditions de fonctionnement en mode chauffage sont données dans le tableau 1. Les valeurs des constituants (HFO-1234yf, HFC-32, HFC-134a) pour chaque composition sont données en pourcentage en poids.

## Tableau 1

| HFO-1234yf | HFC-32 | HFC-134a | Temp sortie évap (°C) | Temp sortie comp (°C) | T sortie cond (°C) | évap P (bar) | cond P (bar) | Taux (p/p) | Glide | rendement comp | % CAP | % COP / COPLorenz |
|---|---|---|---|---|---|---|---|---|---|---|---|---|
| | R404A | | -5 | 77 | 50 | 5,2 | 23,0 | 4,4 | 0,38 | 79,7 | 100 | 57,7 |
| 80 | 15 | 5 | 0 | 77 | 43 | 4,0 | 16,5 | 4,2 | 4,57 | 80,5 | 90 | 64,7 |
| 75 | 20 | 5 | 0 | 79 | 43 | 4,4 | 17,7 | 4,1 | 5,19 | 80,8 | 98 | 64,8 |
| 70 | 25 | 5 | 0 | 82 | 43 | 4,7 | 19,0 | 4,0 | 5,37 | 80,9 | 106 | 64,7 |
| 55 | 20 | 25 | -1 | 82 | 44 | 4,2 | 17,7 | 4,2 | 4,43 | 80,4 | 97 | 65,2 |
| 50 | 25 | 25 | 0 | 84 | 44 | 4,5 | 18,8 | 4,2 | 4,71 | 80,5 | 104 | 65,2 |
| 45 | 30 | 25 | 0 | 87 | 44 | 4,8 | 19,9 | 4,2 | 4,74 | 80,6 | 111 | 65,1 |
| 40 | 35 | 25 | 0 | 90 | 45 | 5,0 | 20,9 | 4,2 | 4,59 | 80,5 | 116 | 64,9 |
| 35 | 40 | 25 | -1 | 93 | 45 | 5,2 | 21,9 | 4,2 | 4,34 | 80,4 | 121 | 64,6 |
| 40 | 20 | 40 | -1 | 84 | 45 | 4,1 | 17,6 | 4,3 | 4,21 | 80,1 | 96 | 65,4 |
| 35 | 25 | 40 | 0 | 86 | 45 | 4,4 | 18,6 | 4,3 | 4,56 | 80,2 | 103 | 65,5 |
| 30 | 30 | 40 | 0 | 89 | 45 | 4,6 | 19,6 | 4,2 | 4,71 | 80,3 | 109 | 65,4 |
| 25 | 35 | 40 | 0 | 92 | 45 | 4,8 | 20,5 | 4,2 | 4,71 | 80,3 | 114 | 65,3 |
| 20 | 40 | 40 | 0 | 95 | 45 | 5,0 | 21,3 | 4,3 | 4,62 | 80,3 | 119 | 65,1 |
| 15 | 20 | 65 | -1 | 87 | 45 | 3,8 | 17,1 | 4,5 | 4,07 | 79,5 | 94 | 65,7 |
| 10 | 25 | 65 | -1 | 90 | 45 | 4,0 | 17,9 | 4,4 | 4,49 | 79,8 | 99 | 65,8 |

Résultats mode refroidissement ou air conditionnée

En mode refroidissement, le système à compression fonctionne entre une température d'entrée du fluide frigorigène à l'évaporateur de -5°C et une température d'entrée du fluide frigorigène au condenseur de 50°C. Le système fournit du froid à 0°C.

Les performances des compositions selon l'invention dans les conditions de fonctionnement en mode refroidissement sont données dans le tableau 2. Les valeurs des constituants (HFO-1234yf, HFC-32, HFC-134a) pour chaque composition sont données en pourcentage en poids.

## Tableau 2

| HFO-1234yf | HFC-32 | HFC-134a | Temp sortie évap (°C) | Temp sortie comp (°C) | T sortie cond (°C) | évap P (bar) | cond P (bar) | Taux (p'/p) | Glide | rendement comp | % CAP | % COP / COPLorenz |
|---|---|---|---|---|---|---|---|---|---|---|---|---|
| | R404A | | -5 | 77 | 50 | 5,2 | 23,0 | 4,4 | 0,38 | 79,7 | 100 | 47,9 |
| 75 | 20 | 5 | 0 | 79 | 43 | 4,4 | 17,7 | 4,1 | 5,19 | 80,8 | 106 | 56,6 |
| 70 | 25 | 5 | 0 | 82 | 43 | 4,7 | 19,0 | 4,0 | 5,37 | 80,9 | 114 | 56,6 |
| 65 | 30 | 5 | 0 | 85 | 44 | 5,0 | 20,2 | 4,0 | 5,22 | 80,9 | 121 | 56,4 |
| 60 | 15 | 25 | -1 | 79 | 45 | 3,9 | 16,6 | 4,3 | 3,83 | 80,2 | 95 | 56,5 |
| 55 | 20 | 25 | -1 | 82 | 44 | 4,2 | 17,7 | 4,2 | 4,43 | 80,4 | 104 | 57,0 |
| 50 | 25 | 25 | 0 | 84 | 44 | 4,5 | 18,8 | 4,2 | 4,71 | 80,5 | 112 | 57,2 |
| 45 | 30 | 25 | 0 | 87 | 44 | 4,8 | 19,9 | 4,2 | 4,74 | 80,6 | 119 | 57,2 |
| 40 | 35 | 25 | 0 | 90 | 45 | 5,0 | 20,9 | 4,2 | 4,59 | 80,5 | 125 | 57,1 |
| 35 | 40 | 25 | -1 | 93 | 45 | 5,2 | 21,9 | 4,2 | 4,34 | 80,4 | 130 | 56,9 |
| 45 | 15 | 40 | -1 | 81 | 45 | 3,8 | 16,6 | 4,4 | 3,59 | 79,8 | 95 | 56,8 |
| 40 | 20 | 40 | -1 | 84 | 45 | 4,1 | 17,6 | 4,3 | 4,21 | 80,1 | 103 | 57,3 |
| 35 | 25 | 40 | 0 | 86 | 45 | 4,4 | 18,6 | 4,3 | 4,56 | 80,2 | 111 | 57,6 |
| 30 | 30 | 40 | 0 | 89 | 45 | 4,6 | 19,6 | 4,2 | 4,71 | 80,3 | 118 | 57,6 |
| 25 | 35 | 40 | 0 | 92 | 45 | 4,8 | 20,5 | 4,2 | 4,71 | 80,3 | 124 | 57,6 |
| 20 | 40 | 40 | 0 | 95 | 45 | 5,0 | 21,3 | 4,3 | 4,62 | 80,3 | 129 | 57,5 |
| 20 | 15 | 65 | -2 | 84 | 46 | 3,5 | 16,3 | 4,6 | 3,43 | 79,2 | 93 | 57,3 |
| 15 | 20 | 65 | -1 | 87 | 45 | 3,8 | 17,1 | 4,5 | 4,07 | 79,5 | 101 | 57,8 |
| 10 | 25 | 65 | -1 | 90 | 45 | 4,0 | 17,9 | 4,4 | 4,49 | 79,8 | 107 | 58,1 |
| 5 | 15 | 80 | -2 | 86 | 46 | 3,4 | 15,9 | 4,7 | 3,28 | 78,8 | 91 | 57,4 |

### Résultats mode réfrigération basse température

En mode réfrigération basse température, le système à compression fonctionne entre une température d'entrée du fluide frigorigène à l'évaporateur de -30°C et une température d'entrée du fluide frigorigène au condenseur de 40°C. Le système fournit du froid à -25°C.

Les performances des compositions selon l'invention dans les conditions de fonctionnement en mode réfrigération basse température sont données dans le tableau 3. Les valeurs des constituants (HFO-1234yf, HFC-32, HFC-134a) pour chaque composition sont données en pourcentage en poids.

Tableau 3

| | | | Temp sortie évap (°C) | Temp sortie comp (°C) | T sortie cond (°C) | évap P (bar) | cond P (bar) | Taux (p/p) | Glide | rendement comp | % CAP | % COP / COPLorenz |
|---|---|---|---|---|---|---|---|---|---|---|---|---|
| | R404A | | -30 | 101 | 40 | 2,1 | 18,1 | 8,8 | 0,45 | 53,7 | 100 | 31,7 |
| HFO-1234yf | HFC-32 | HFC-134a | | | | | | | | | | |
| 75 | 20 | 5 | -25 | 103 | 33 | 1,7 | 13,8 | 8,3 | 4,68 | 58,0 | 101 | 39,3 |
| 70 | 25 | 5 | -25 | 106 | 33 | 1,8 | 14,8 | 8,1 | 4,94 | 59,2 | 110 | 40,2 |
| 65 | 30 | 5 | -25 | 110 | 33 | 2,0 | 15,8 | 8,1 | 4,88 | 59,6 | 118 | 40,5 |
| 60 | 35 | 5 | -25 | 115 | 34 | 2,1 | 16,7 | 8,1 | 4,59 | 59,4 | 125 | 40,4 |
| 55 | 40 | 5 | -26 | 121 | 35 | 2,2 | 17,6 | 8,1 | 4,15 | 58,9 | 131 | 40,0 |
| 50 | 25 | 25 | -26 | 113 | 34 | 1,7 | 14,7 | 8,4 | 4,31 | 57,0 | 108 | 39,4 |
| 45 | 30 | 25 | -26 | 117 | 34 | 1,9 | 15,5 | 8,3 | 4,41 | 57,5 | 116 | 39,8 |
| 40 | 35 | 25 | -26 | 122 | 34 | 2,0 | 16,3 | 8,3 | 4,34 | 57,6 | 122 | 39,8 |
| 35 | 40 | 25 | -26 | 127 | 35 | 2,0 | 17,1 | 8,3 | 4,15 | 57,4 | 128 | 39,5 |
| 30 | 30 | 40 | -25 | 124 | 34 | 1,8 | 15,2 | 8,6 | 4,52 | 55,7 | 113 | 38,8 |
| 25 | 35 | 40 | -25 | 128 | 35 | 1,9 | 15,9 | 8,5 | 4,59 | 56,0 | 119 | 39,0 |
| 20 | 40 | 40 | -25 | 134 | 35 | 1,9 | 16,5 | 8,5 | 4,56 | 56,0 | 124 | 38,9 |

## Revendications

1. Utilisation d'une composition ternaire du 2,3,3,3 tetrafluoropropène, du 1,1,1,2-tetrafluoroéthane et du difluorométhane, comme fluide de transfert de chaleur, dans des systèmes de réfrigération à compression avec des échangeurs en mode contre-courant ou en mode courant croisé à tendance contre-courant.

2. Utilisation selon la revendication 1 **caractérisé en ce que** la composition contiennent essentiellement de 2 à 80 % en poids du 2,3,3,3 tetrafluoropropène, de 2 à 80 % en poids du HFC-134a et de 2 à 80 % en poids du HFC-32.

3. Utilisation selon la revendication 1 **caractérisée en ce que** la composition contient essentiellement de 5 à 25 % en poids du 2,3,3,3 tetrafluoropropène, de 60 à 80 % en poids du HFC-134a et de 15 à 25 % en poids du HFC-32.

4. Utilisation selon la revendication 1 **caractérisée en ce que** la composition contient essentiellement de 45 à 80 % en poids, de préférence de 65 à 80 % en poids du 2,3,3,3 tetrafluoropropène, de 5 à 25 % en poids, de préférence de 5 à 10 % en poids du HFC-134a et de 15 à 30 % en poids du HFC-32.

5. Utilisation selon l'une quelconque des revendications 1 à 4 **caractérisée en ce que** la composition est stabilisée.

6. Procédé de transfert de chaleur dans lequel on utilise une composition ternaire du 2,3,3,3 tetrafluoropropène, du 1,1,1,2-tetrafluoroéthane et du difluorométhane, comme fluide frigorigène dans des systèmes à compression avec des échangeurs en mode contre-courant ou en mode courant croisé à tendance contre-courant.

7. Procédé selon la revendication 6 **caractérisé en ce que** la composition contient essentiellement de 5 à 25 % en poids du 2,3,3,3 tetrafluoropropène, de 60 à 80 % en poids du HFC-134a et de 15 à 25 % en poids du HFC-32.

8. Procédé selon la revendication 6 **caractérisé en ce que** la composition contient essentiellement 45 à 80 % en poids, de préférence de 65 à 80 % en poids du 2,3,3,3 tetrafluoropropène, de 5 à 25 % en poids, de préférence de 5 à10 % en poids du HFC-134a et de 15 à 30 % en poids du H FC-32.

9. Procédé selon l'une quelconque des revendications 6 à 8 **caractérisé en ce qu'**il est mis en oeuvre en présence de lubrifiant.

**Patentansprüche**

1. Verwendung einer ternären Zusammensetzung von 2,3,3,3-Tetrafluorpropen, 1,1,1,2-Tetrafluorethan und Difluormethan als Wärmeübertragungsfluid in Kompressionskälteanlagen mit Austauschern im Gegenstrom-Modus oder im Querstrom-Modus mit Gegenstrom-Tendenz.

2. Verwendung nach Anspruch 1, **dadurch gekennzeichnet, dass** die Zusammensetzung im Wesentlichen 2 bis 80 Gew.-% 2,3,3,3-Tetrafluorpropen, 2 bis 80 Gew.-% H-FKW 134a und 2 bis 80 Gew.-% H-FKW 32 enthält.

3. Verwendung nach Anspruch 1, **dadurch gekennzeichnet, dass** die Zusammensetzung im Wesentlichen 5 bis 25 Gew.-% 2,3,3,3-Tetrafluorpropen, 60 bis 80 Gew.-% H-FKW 134a und 15 bis 25 Gew.-% H-FKW 32 enthält.

4. Verwendung nach Anspruch 1, **dadurch gekennzeichnet, dass** die Zusammensetzung im Wesentlichen 45 bis 80 Gew.-% und vorzugsweise 65 bis 80 Gew.-% 2,3,3,3-Tetrafluorpropen, 5 bis 25 Gew.-% und vorzugsweise 5 bis 10 Gew.-% H-FKW 134a und 15 bis 30 Gew.-% H-FKW 32 enthält.

5. Verwendung nach einem der Ansprüche 1 bis 4, **dadurch gekennzeichnet, dass** die Zusammensetzung stabilisiert ist.

6. Verfahren zur Übertragung von Wärme, bei dem man eine ternäre Zusammensetzung von 2,3,3,3-Tetra-fluorpropen, 1,1,1,2-Tetrafluorethan und Difluormethan als Kältemittel in Kompressionsanlagen mit Austauschern im Gegenstrom-Modus oder im Querstrom-Modus mit Gegenstrom-Tendenz verwendet.

7. Verfahren nach Anspruch 6, **dadurch gekennzeichnet, dass** die Zusammensetzung im Wesentlichen 5 bis 25 Gew.-% 2,3,3,3-Tetrafluorpropen, 60 bis 80 Gew.-% H-FKW 134a und 15 bis 25 Gew.-% H-FKW 32 enthält.

8. Verfahren nach Anspruch 6, **dadurch gekennzeichnet, dass** die Zusammensetzung im Wesentlichen 45 bis 80 Gew.-% und vorzugsweise 65 bis 80 Gew.-% 2,3,3,3-Tetrafluorpropen, 5 bis 25 Gew.-% und vorzugsweise 5 bis 10 Gew.-% H-FKW 134a und 15 bis 30 Gew.-% H-FKW 32 enthält.

9. Verfahren nach einem der Ansprüche 6 bis 8, **dadurch gekennzeichnet, dass** es in Gegenwart von Schmiermittel durchgeführt wird.

**Claims**

1. Use of a ternary composition of 2,3,3,3-tetrafluoropropene, 1,1,1,2-tetrafluoroethane and difluoromethane, as a heat-transfer fluid, in compression refrigeration systems with exchangers operating in counterflow mode or in crossflow mode with counterflow tendency.

2. Use according to Claim 1, **characterized in that** the composition essentially contains from 2 to 80% by weight of 2,3,3,3-tetrafluoropropene, from 2 to 80% by weight of HFC-134a and from 2 to 80% by weight of HFC-32.

3. Use according to Claim 1, **characterized in that** the composition essentially contains from 5 to 25% by weight of 2,3,3,3-tetrafluoropropene, from 60 to 80% by weight of HFC-134a and from 15 to 25% by weight of HFC-32.

4. Use according to Claim 1, **characterized in that** the composition essentially contains from 45 to 80% by weight, preferably from 65 to 80% by weight of 2,3,3,3-tetrafluoropropene, from 5 to 25% by weight, preferably from 5 to 10% by weight of HFC-134a and from 15 to 30% by weight of HFC-32.

**5.** Use according to any one of Claims 1 to 4, **characterized in that** the composition is stabilized.

**6.** Heat-transfer process in which a ternary composition of 2,3,3,3-tetrafluoropropene, 1,1,1,2-tetrafluoroethane and difluoromethane is used as a refrigerant in compression systems with exchangers operating in counterflow mode or in cross-flow mode with counterflow tendency.

**7.** Process according to Claim 6, **characterized in that** the composition essentially contains from 5 to 25% by weight of 2,3,3,3-tetrafluoropropene, from 60 to 80% by weight of HFC-134a and from 15 to 25% by weight of HFC-32.

**8.** Process according to Claim 6, **characterized in that** the composition essentially contains from 45 to 80% by weight, preferably from 65 to 80% by weight of 2,3,3,3-tetrafluoropropene, from 5 to 25% by weight, preferably from 5 to 10% by weight of HFC-134a and from 15 to 30% by weight of HFC-32.

**9.** Process according to any one of Claims 6 to 8, **characterized in that** it is carried out in the presence of lubricant.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2004037913 A
- WO 2005105947 A
- WO 2006094303 A
- US 2006243944 A
- FR 2182956
- FR 2256381